# EUROPEAN PATENT SPECIFICATION

(11) **EP 2 923 531 B1**
(45) Date of publication and mention of the grant of the patent: **19.04.2023**
(21) Application number: 12888792.4
(22) Date of filing: 21.11.2012
(51) Int. Cl.: H05B 45/30, H05B 45/40

(54) **DRIVER FOR LED LIGHTING AND METHOD OF DRIVING LED LIGHTING**
ANSTEUERUNG FÜR LED-BELEUCHTUNG UND VERFAHREN ZUR ANSTEUERUNG EINER LED-BELEUCHTUNG
PILOTE POUR ÉCLAIRAGE À DEL ET PROCÉDÉ PERMETTANT DE PILOTER UN ÉCLAIRAGE À DEL

(43) Date of publication of application: 30.09.2015
(73) Proprietor: Versitech Limited, Hong Kong (CN)
(72) Inventor: HUI, Ron Shu Yuen, Hong Kong (CN)
(74) Representative: Rickard, David John
(86) International application number: PCT/CN2012/084953
(87) International publication number: WO 2014/078994

(56) References cited:
- CN-A- 101 699 922
- JP-A- 2010 055 841
- JP-A- 2011 049 075
- US-A1- 2004 189 555
- US-A1- 2009 184 668
- US-A1- 2010 270 942
- US-A1- 2012 170 337
- US-B1- 8 030 853
- US-B1- 8 030 853

## Description

### Technical Field

The present invention relates to drivers for LED lighting and methods of driving LED lighting. The present invention is described herein primarily in relation to, but not limited to, high power lighting applications. In particular the invention relates to a driver for LED lighting according to claim 1 and a method of driving LED lighting according to claim 8. Preferred embodiments of the invention are defined by the dependent claims.

### Background Art

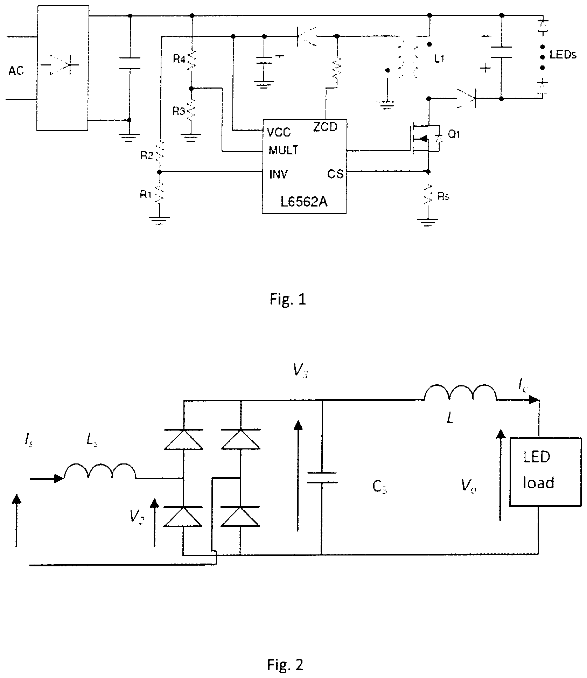

Recent work on LED drivers show that both switched mode LED drivers using active power electronic switches ("active LED drivers") such as the one shown in Fig. 1 and passive LED drivers without active power electronic switches ("passive LED drivers") such as the one shown in Fig. 2 have been proposed for LED systems. Fig. 1 shows an "active" offline LED system from the ST Microelectronics Application Notes Power Supply And Power Management L6562A TSM1052 AN2711 Datasheet. For offline applications in which the LED systems are connected to AC mains, active and passive LED drivers essentially turn the AC voltage source at mains frequencies into current sources for driving the LED devices usually connected in series as LED strings.

For compact LED driver designs, the active LED drivers are good solutions. Active LED drivers are based on switched mode power supply technologies. Since the switching frequency could be up to hundreds of kilo-Hertz, the component sizes of the energy storage components such as inductors and capacitors can be reduced. However, due to their requirements for complicated electronic circuitry such as auxiliary power supplies, control integrated circuits, gate drive circuits for power switches, etc., active LED drivers are less reliable in outdoor applications, which are subject to harsh environmental conditions such as wide temperature and humidity changes and lightning.

Passive LED drivers, on the other hand, have simple circuit structures without the need for auxiliary power supplies, control integrated circuits, gate drive circuits for power switches, etc. However, because of mains frequency operation, these passive drivers typically need passive energy storage components of larger size. These components include electrolytic capacitors which have a limited lifetime and are highly sensitive to temperature. Typically, the electrolytic capacitors often used in LED lighting have a lifetime of 15,000 hours or 1.7 years. This lifetime doubles if the operating temperature of the LED lighting is decreased by 10°C, and is halved if the operating temperature is increased by 10°C. Nonetheless, due to their circuit simplicity and robustness against harsh environments, passive LED drivers are more reliable in outdoor applications.

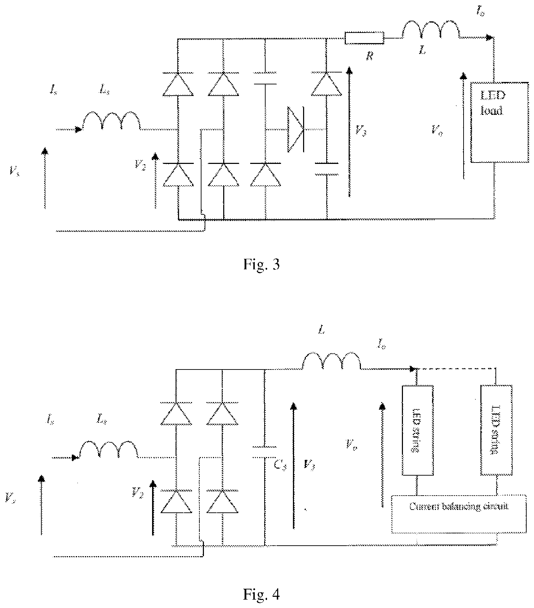

US patent application no. 13/129,793 describes robust LED drivers for harsh environments which use the passive driver approach without the need for electrolytic capacitors. These passive LED drivers are based on a full-bridge diode rectifier, as shown in Fig. 2. The output voltage of the diode rectifier is smoothed by a non-electrolytic capacitor C3 and an output inductor turns this capacitor voltage into a current source for driving the LED load. In some cases, the capacitor C3 can be replaced by various forms of valley-fill circuits as shown in Fig. 3.

For high-power LED lighting systems, such as those used in street lighting, LED devices are usually connected in series to form LED strings. If high power is required, it is sometimes necessary to use parallel-connected strings in order to achieve the required power and luminous performance. Since LED devices are not perfectly identical even if they are produced by the same manufacturer, the voltage-current (VI) characteristics of LED devices of the same model type are not exactly identical. Thus, the V-I characteristics of parallel-connected LED strings are also different. Such differences can lead to a current imbalance problem that, in turn, can lead to uneven light and heat distribution, and more importantly, a reduction of the lifetime of LED modules due to unintended over-current situations.

In order to address current imbalance problems with parallel-connected LED strings, various techniques have been proposed, such as those reviewed in "Novel Self-configurable Current Mirror Techniques for Reducing Current Imbalance in Parallel Light-Emitting Diode (LED) strings" authored by Li S.N, Zhong W.Z., Chen W., and Hui S.Y.R. in IEEE Transactions on Power Electronics, Volume: 27, Issue: 4, 2012, Pages: 2153 - 2162. In general, current mirror techniques and switched mode current control methods are commonly used for reducing current imbalance in parallel current strings. One current balancing circuit used in such techniques is shown in Fig. 4. However, using these techniques and methods, regardless of their form, will increase circuit complexity and costs.

US patent number 8030853 discloses a driving circuit for driving one or more LEDs which requires an active LED driver with active switches.

### Disclosure of Invention

### Technical Problem

It is an object of the present invention to overcome or ameliorate at least one of the disadvantages of the prior art, or to provide a useful alternative.

### Solution to Problem

### Technical Solution

The present invention provides, in a first aspect, a driver for LED lighting having a plurality of LEDs, the driver adapted to receive AC input power from an AC power source and including: a voltage multiplier for supplying a rectified output power to the LEDs to produce a luminous flux; an input inductor adapted to connect between the AC power source and the voltage multiplier, the input inductor thereby converting the AC power source from a voltage source to a current source to provide a limited AC current to the voltage multiplier; an input capacitor adapted to connect across the AC power source before the input inductor; and a smoothing capacitor to smooth the rectified output power; the driver being free from valley-fill circuits, active switches, and electrolytic capacitors.

Preferably, the plurality of LEDs are connected in series.

In various embodiments, the voltage multiplier is one or any combination of: a voltage doubler, a voltage tripler, and a voltage quadrupler. In some embodiments, the voltage multiplier is one or the combination of: a Delon voltage doubler, and a Greinacher voltage doubler.

Preferably, the driver allows a variation in the rectified output power corresponding to a variation in the luminous flux unnoticeable by a human eye.

Preferably, the driver includes an output capacitor between the voltage multiplier and the LEDs. Further, the driver preferably includes an output inductor between the voltage multiplier and the LEDs.

In some embodiments, the driver includes a smoothing capacitor between the voltage multiplier and the LEDs.

Preferably, the LEDs are in the form of series-connected strings connected in series. Preferably, the series-connected strings are arranged in parallel.

The present invention also provides, in a second aspect, a method of driving LED lighting having a plurality of LEDs, the method including:
receiving AC input power having an input voltage;
converting the AC input power from a voltage source to a current source to provide a limited AC current with an input inductor;
correcting an input power factor with an input capacitor;
multiplying the input voltage to supply a multiplied output voltage to the LEDs;
rectifying the AC input power to supply a rectified output power to the LEDs to produce a luminous flux; and
smoothing the AC input power with a smoothing capacitor (6) to allow a variation in the rectified output power corresponding to a variation in the luminous flux unnoticeable by a human eye, without using valley-fill circuits, active switches, and electrolytic capacitors.

Preferably, the plurality of LEDs are connected in series.

In various embodiments, the input voltage is doubled, tripled, or quadrupled. In some embodiments, the input voltage is multiplied using one or the combination of: a Delon voltage doubler, and a Greinacher voltage doubler.

Preferably, the method includes allowing a variation in the rectified output power corresponding to a variation in the luminous flux unnoticeable by a human eye.

### Brief Description of Drawings

### Description of Drawings

Preferred embodiments in accordance with the best mode of the present invention will now be described, by way of example only, with reference to the accompanying figures, in which:
Fig. 1 is a schematic of a prior art offline LED system using an active driver;
Fig. 2 is a schematic of a prior art offline LED system using a passive driver;
Fig. 3 is a schematic of another prior art offline LED system using a passive driver;
Fig. 4 is a schematic of a further prior art offline LED system having parallel-connected LED strings and using a passive driver and a current balancing circuit;
Fig. 5 is a schematic of a driver for LED lighting according to an embodiment of the present invention;
Fig. 6 is a schematic of a driver for LED lighting according to another embodiment of the present invention; and
Fig. 7 is a schematic of a driver for LED lighting according to a further embodiment of the present invention;
Fig. 8 is a schematic of a driver for LED lighting according to another embodiment of the present invention; and
Fig. 9 is a schematic of a driver for LED lighting according to yet another embodiment of the present invention.

### Best Mode for Carrying out the Invention

### Best Mode

Referring to the figures, an embodiment of the present invention provides a driver 1 for LED lighting having a plurality of LEDs 2. The driver 1 receives AC input power from an AC power source 3 and includes a voltage multiplier 4 for supplying a rectified output power to the LEDs 2 to produce a luminous flux.

Depending on the requirements of specific applications, the voltage multiplier can be one or any combination of: a voltage doubler, a voltage tripler, and a voltage quadrupler. For example, in some embodiments, the voltage multiplier is one or the combination of: a Delon voltage doubler, and a Greinacher voltage doubler.

The drivers of the present invention are particularly suited to use as passive LED drivers for high-power applications such as street lighting and other outdoor lighting applications. The drivers provided by the present invention reduce the number of parallel-connected LED strings required, or avoid the need for parallel-connected LED strings altogether. In the latter case, all of the LEDs are connected in series, and therefore, avoid the need for additional circuits, such as current mirror circuits and other current balancing circuits, to prevent the current imbalance problems that occur with parallel-connected LED strings.

It is noted, however, that in the case where all of the LEDs are connected in series, the LEDs can be in the form of a plurality of series-connected LED strings or modules. These LED strings are in turn connected in series, effectively forming a single chain of LEDs all connected in series. However, the series-connected LED strings can be arranged in parallel or any other configuration. Thus, they can replicate any arrangement of parallel-connected LED strings.

In the presently described embodiment of the driver according to the invention, the driver 1 also allows a variation in the rectified output power corresponding to a variation in the luminous flux unnoticeable by a human eye. Embodiments have allowed variations in the luminous flux of up to 12%, and it has been shown that human eyes are not sensitive to variations in luminous flux of such magnitudes.

The variations in rectified output power that correspond to such variations in luminous flux do not require energy storage components of larger size, and in particular, do not require the use of limited lifetime electrolytic capacitors. Thus, drivers of the present invention that allow such variations in rectified output power have been found to be unexpectedly suited to functioning as simple, robust, and reliable passive LED drivers for harsh environments, such as outdoor applications.

Furthermore, in view of the advantages described above of having a voltage multiplier, drivers of the present invention having voltage multipliers that also allow variations in the rectified output power corresponding to unnoticeable variations in luminous flux provide rather surprising and unexpected advantages when used as passive LED drivers for high-power applications in harsh environments, such as outdoor lighting and street lighting applications. In particular, these advantages overcome or ameliorate the problems in such applications that are associated with current imbalance and the limited lifetime of electrolytic capacitors, as discussed in detail above.

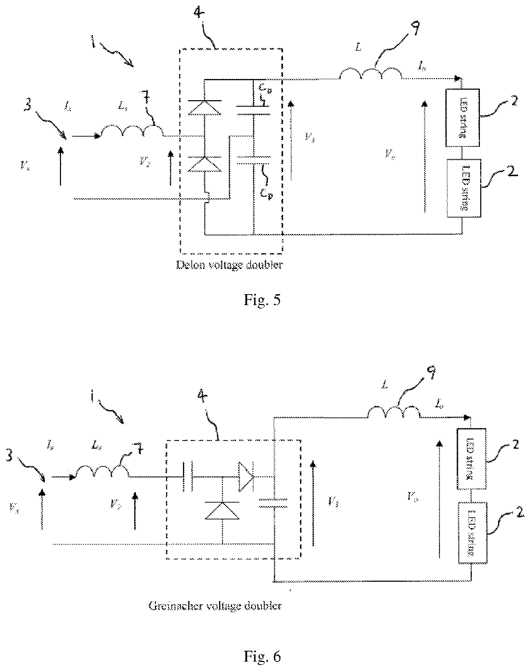

The driver 1 allows a variation in the rectified output power corresponding to a variation in the luminous flux unnoticeable by a human eye. Referring to Fig. 5, the voltage multiplier 4 takes the form of a Delon voltage doubler.

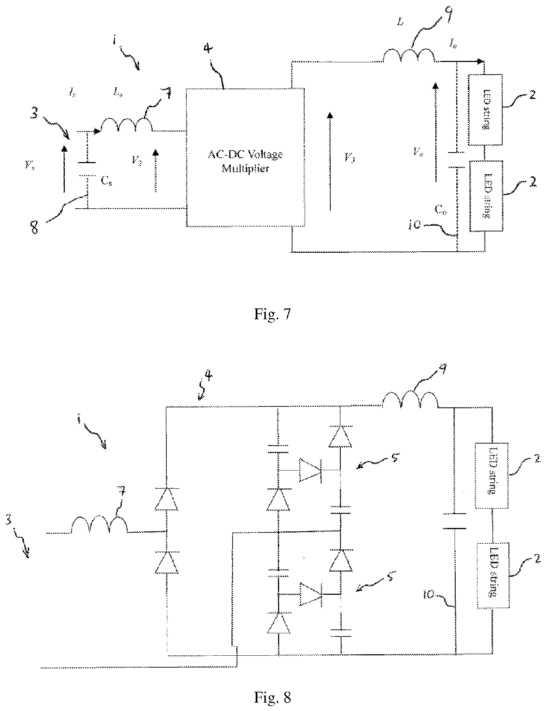

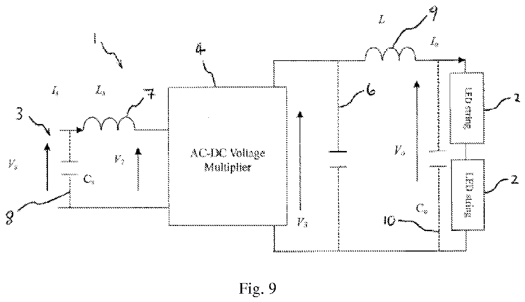

Instead of a valley-fill circuit 5 as shown in Fig. 8, a smoothing capacitor 6 is placed across the output of the voltage multiplier 4 between the voltage multiplier 4 and the LEDs 2 in order to allow the variation in the rectified power corresponding to a variation in the luminous flux unnoticeable by a human eye. This is shown in Fig. 9. The driver 1 also includes an input inductor 7 (Ls) between the AC power source 3 and the voltage multiplier 4. The input inductor 7 is large enough to provide input current filtering, and the input current is primarily sinusoidal and has low current harmonic content. Thus, having the smoothing capacitor 6 replacing the valley-fill circuit 5 is sufficient in allowing the variation in the rectified output power required to produce an unnoticeable variation in the luminous flux.

The driver 1 also includes an input capacitor 8 (Cs) between the AC power source 3 and the voltage multiplier 4. The driver 1 can also include an output inductor 9 (L) between the voltage multiplier 4 and the LEDs 2. In this case, the smoothing capacitor 6 is placed between the voltage multiplier 4 and the output inductor 9.

The present invention also provides a method of driving LED lighting having a plurality of LEDs. Embodiments of the method will be readily apparent from the description above. For example, referring to the figures, an embodiment of the method includes: receiving AC input power having an input voltage; multiplying the input voltage to supply a multiplied output voltage to the LEDs 2; and rectifying the AC input power to supply a rectified output power to the LEDs 2 to produce a luminous flux.

In some embodiments, the method includes allowing a variation in the rectified output power corresponding to a variation in the luminous flux unnoticeable by a human eye.

Considering the figures in more particular detail, Fig. 7 shows the basic structure of an offline passive LED system in accordance with the present invention. The input capacitor 8 (Cs) is added as a power correction capacitor. An output capacitor 10 (Co) in the form of a small capacitor can be added across the output terminal for providing a continuous current path for the output inductor current in case there is an open circuit fault in the string of LEDs 2. In particular, the output capacitor 10 is placed between the output inductor 9 and the LEDs. As noted above, the voltage multiplier can be a voltage doubler, or if more power and luminous output is needed for the offline passive LED system, the voltage multiplier concept can be extended to a voltage tripler and a voltage quadrupler.

As explained previously, the use of parallel LED strings is to increase the output power and thus luminous output of LED lighting systems. For passive LED drivers, the rectified output voltage of the diode rectifier is related to the input voltage of the AC mains. Such DC voltage sets a limit on the number of series-connected LED modules in each LED string that are possible. For example, if the output DC voltage is 150V and the voltage and current ratings of each series-connected LED module is 10V and 0.35A respectively, then each LED string can consist of 15 series-connected LED modules and the power of each string is 52.5W. Therefore, for LED systems of nominal power of 100W and 150W, two and three LED strings will be needed, respectively, if the same output voltage of the passive LED driver is employed. Fig. 4 illustrates the use of parallel-connected LED strings to expand the power output.

The simplest way to eliminate current imbalance is of course to use a single string. However, passive LED drivers based on the use of full wave diode rectifiers and an input inductor Lₛ, as depicted in Fig. 2 and Fig. 3, have some limitations in terms of the output voltage. Therefore, the passive LED drivers of Figs. 2 to 4 are not suitable for single LED string applications unless the power of the single LED string can meet the power and luminous performance required by the LED lighting system.

Instead of using parallel-connected strings for the same DC voltage output provided by the passive LED driver, the present invention uses a voltage multiplier to provide a scalable DC output voltage for series-connected LED strings (to form one single LED string).

Fig.5 shows a specific example of using an AC-DC voltage doubler in the form of a Delon voltage doubler (enclosed in the dotted box) as the voltage multiplier 4. The output voltage of voltage doubler in Fig. 5 is twice the output voltage of the full-bridge diode rectifier of Fig. 4. As a result, the power of two LED strings can be met by having the two LED strings connected in series, effectively forming a single LED string with twice the power of the original string. Other forms of voltage doublers such as the Greinacher voltage doubler can also be used for doubling the output voltage. Fig. 6 shows a driver with a Greinacher voltage doubler.

As described above, the present invention is directed to circuit topologies and methods of operation of LED drivers for powering only a single lighting-emitting diode (LED) string. While high-power LED systems normally have the LEDs arranged in parallel-connected strings, the use of one LED string can eliminate the current imbalance problems that occur among parallel-connected LED strings. The present invention describes how passive LED drivers, that do not need auxiliary power supplies, active semiconductor switches and control integrated circuits, can be designed to cope with high-voltage and low-current requirements in a single LED string arrangement. With the use of a single-string LED arrangement, the requirements for balancing parallel LED string currents can be eliminated.

The present invention is also directed to drivers that allow a variation in rectified out power that corresponds to a variation in luminous flux produced by the LEDs unnoticeable by a human eye. This alleviates the need to use limited lifetime electrolytic capacitors in the drivers, which results in robust and reliable drivers with much longer lifetimes. Such drivers are especially suited to harsh environments, such as those encountered in outdoor lighting and street lighting applications.

This, the combination of features of the present invention provides robust and reliable LED drivers having long lifetimes that do not require current balancing techniques and their associated circuitry. The present invention is therefore particularly suitable for, but not restricted to, high-power LED lighting applications such as outdoor and street lighting.

Although the invention has been described with reference to specific examples, it will be appreciated by those skilled in the art that the invention can be embodied in many other forms. It will also be appreciated by those skilled in the art that the features of the various examples described can be combined in other combinations.

## Claims

1. A driver (1) for LED lighting having a plurality of LEDs (2), the driver adapted to receive AC input power from an AC power source (3) and including: a voltage multiplier (4) for supplying a rectified output power to the LEDs (2) to produce a luminous flux;
**characterized in that** the driver further includes:
an input inductor (7) adapted to connect between the AC power source (3) and the voltage multiplier (4), the input inductor (7) thereby converting the AC power source (3) from a voltage source to a current source to provide a limited AC current to the voltage multiplier (4); an input capacitor (8) adapted to connect across the AC power source before the input inductor (7); and a smoothing capacitor (6) to smooth the rectified output power; the driver being free from valley-fill circuits, active switches, and electrolytic capacitors.

2. A driver (1) according to claim 1 wherein the plurality of LEDs (2) are connected in series.

3. A driver (1) according to claim 1 or 2 wherein the voltage multiplier (4) is one or any combination of: a voltage doubler, a voltage tripler, and a voltage quadrupler.

4. A driver (1) according to claim 1 or 2 wherein the voltage multiplier (4) is one or the combination of: a Delon voltage doubler, and a Greinacher voltage doubler.

5. A driver (1) according to any one of the preceding claims including any one or more of:
an output capacitor (10) between the voltage multiplier (4) and the LEDs (2); and
an output inductor (9) between the voltage multiplier (4) and the LEDs (2).

6. A driver (1) according to any one of the preceding claims wherein the LEDs (2) are in the form of series-connected strings connected in series.

7. A driver (1) according to claim 6 wherein the series-connected strings are arranged in parallel.

8. A method of driving LED lighting using the driver according to claim 1, the method including:
receiving AC input power having an input voltage;
converting the AC input power from a voltage source to a current source to provide a limited AC current with the input inductor (7);
correcting a power with the input capacitor (8);
multiplying the input voltage to supply a multiplied output voltage to the LEDs (2);
rectifying the AC input power to supply a rectified output power to the LEDs (2) to produce a luminous flux; and
smoothing the rectified output power with the smoothing capacitor (6) to allow a variation in the rectified output power corresponding to a variation in the luminous flux unnoticeable by a human eye, without using valley-fill circuits, active switches, and electrolytic capacitors.

9. A method according to claim 8 wherein the plurality of LEDs (2) are connected in series.

10. A method according to claim 8 or 9 wherein the input voltage is doubled, tripled, or quadrupled.

11. A method according to claim 8 or 9 wherein the input voltage is multiplied using one or the combination of: a Delon voltage doubler, and a Greinacher voltage doubler.

12. A LED lighting system having a driver (1) according to any one of claims 1 to 7.

## Patentansprüche

1. Ein Treiber (1) für LED-Beleuchtung mit einer Vielzahl von LEDs (2); der Treiber ist so beschaffen, dass er eine Wechselstrom-Eingangsleistung von einer Wechselstrom-Leistungsquelle (3) empfängt und Folgendes umfasst: einen Spannungsvervielfacher (4) zur Lieferung einer gleichgerichteten Ausgangsleistung an die LEDs (2), um einen Lichtstrom zu erzeugen; **dadurch gekennzeichnet, dass** der Treiber außerdem umfasst:
eine Eingangsdrossel (7), die so beschaffen ist, dass sie zwischen der Wechselstrom-Leistungsquelle (3) und dem Spannungsvervielfacher (4) angeschlossen ist, wodurch die Eingangsdrossel (7) die Wechselstrom-Leistungsquelle (3) von einer Spannungsquelle zu einer Stromquelle umwandelt, um einen begrenzten Wechselstrom an den Spannungsvervielfacher (4) zu liefern;
einen Eingangskondensator (8), der so beschaffen ist, dass er an die Wechselstrom-Leistungsquelle vor der Eingangsdrossel (7) angeschlossen ist; und einen Glättungskondensator (6) zur Glättung der gleichgerichteten Ausgangsleistung; der Treiber ist dabei frei von Valley-Fill-Schaltungen, aktiven Schaltern und Elektrolytkondensatoren.

2. Ein Treiber (1) nach Anspruch 1, wobei die Vielzahl von LEDs (2) in Reihe geschaltet ist.

3. Ein Treiber (1) nach Anspruch 1 oder 2, wobei der Spannungsvervielfacher (4) ein Spannungsverdoppler, ein Spannungsverdreifacher und ein Spannungsvervierfacher oder eine beliebige Kombination daraus ist.

4. Ein Treiber (1) nach Anspruch 1 oder 2, wobei der Spannungsvervielfacher (4) ein Delon-Spannungsverdoppler oder Greinacher-Spannungsverdoppler oder eine Kombination davon ist.

5. Ein Treiber (1) nach einem der vorhergehenden Ansprüche, einschließlich eines oder mehrerer der Folgenden:
ein Ausgangskondensator (10) zwischen dem Spannungsvervielfacher (4) und den LEDs (2);
und
eine Ausgangsdrossel (9) zwischen dem Spannungsvervielfacher (4) und den LEDs (2).

6. Ein Treiber (1) nach einem der vorhergehenden Ansprüche, wobei die LEDs (2) in Form von in Reihe geschalteten Strängen vorliegen, die in Serie verbunden sind.

7. Ein Treiber (1) nach Anspruch 6, wobei die in Reihe geschalteten Stränge parallel angeordnet sind.

8. Ein Verfahren zur Ansteuerung einer LED-Beleuchtung unter Verwendung des Treibers nach Anspruch 1, wobei das Verfahren umfasst:
Empfang von Wechselstrom-Eingangsleistung mit einer Eingangsspannung;
Umwandlung der Wechselstrom-Eingangsleistung von einer Spannungsquelle in eine Stromquelle, um einen begrenzten Wechselstrom mit der Eingangsdrossel (7) zu liefern;
Korrektur einer Leistung mit dem Eingangskondensator (8);
Vervielfachung der Eingangsspannung, um eine vervielfachte Ausgangsspannung an die LEDs (2) zu liefern;
Gleichrichtung der Wechselstrom-Eingangsspannung, um eine gleichgerichtete Ausgangsleistung an die LEDs (2) zu liefern, um einen Lichtstrom zu erzeugen; und
Glättung der gleichgerichteten Ausgangsleistung mit dem Glättungskondensator (6), um eine Veränderung der gleichgerichteten Ausgangsleistung zu ermöglichen, die einer für das menschliche Auge nicht wahrnehmbaren Änderung des Lichtstroms entspricht, ohne Verwendung von Valley-Fill-Schaltungen, aktiven Schaltern und Elektrolytkondensatoren.

9. Ein Verfahren nach Anspruch 8, wobei die Vielzahl von LEDs (2) in Reihe geschaltet ist.

10. Ein Verfahren nach Anspruch 8 oder 9, wobei die Eingangsspannung verdoppelt, verdreifacht oder vervierfacht wird.

11. Ein Verfahren nach Anspruch 8 oder 9, wobei die Eingangsspannung unter Verwendung eines Delon-Spannungsverdopplers oder eines Greinacher-Spannungsverdopplers oder einer Kombination davon vervielfacht wird.

12. Ein LED-Beleuchtungssystem mit einem Treiber (1) nach einem der Ansprüche 1 bis 7.

## Revendications

1. Pilote (1) pour l'éclairage LED comprenant une pluralité de LED (2), le pilote étant adapté pour recevoir une alimentation d'entrée CA d'une source d'alimentation (3) et comprenant : un multiplicateur de tension (4) pour fournir une alimentation de sortie redressée aux LED (2) afin de produire un flux lumineux; **caractérisé en ce que** le pilote comprend en outre:
Un inducteur d'entrée (7) adapté pour la connexion entre la source d'alimentation CA (3) et le multiplicateur de tension (4), l'inducteur d'entrée (7) convertissant ainsi la source d'alimentation CA (3) d'une source de tension en une source d'intensité afin de fournir une intensité CA limitée au multiplicateur de tension (4) ; un condensateur d'entrée (8) adapté pour la connexion en travers de la source d'alimentation CA avant l'inducteur d'entrée (7); et un condensateur de filtrage (6) pour filtrer l'alimentation de sortie redressée ; le pilote étant exempt de tout circuit de lissage, interrupteur actif et condensateur électrolytique.

2. Pilote (1) de la revendication 1 dans lequel la pluralité de LED (2) est connectée en série.

3. Pilote (1) de la revendication 1 ou 2 dans lequel le multiplicateur de tension (4) est l'un des éléments suivants ou une quelconque combinaison de ceux-ci : doubleur de tension, tripleur de tension et quadrupleur de tension.

4. Pilote (1) de la revendication 1 ou 2 dans lequel le multiplicateur de tension (4) est l'un des éléments suivants ou leur combinaison: doubleur de tension Delon et doubleur de tension Greinacher.

5. Pilote (1) de l'une quelconque des revendications précédentes comprenant un ou plusieurs des éléments suivants:
un condensateur de sortie (10) entre le multiplicateur de tension (4) et les LED (2) ; et
un inducteur de sortie (9) entre le multiplicateur de tension (4) et les LED (2).

6. Pilote (1) de l'une quelconque des revendications précédentes dans lequel les LED (2) se présentent sous la forme de chaînes connectées en série montées en série.

7. Pilote (1) de la revendication 6 dans lequel les chaînes connectées en série sont disposées en parallèle.

8. Procédé de pilotage d'éclairage LED utilisant le pilote conformément à la revendication 1, le procédé comprenant:
la réception d'une alimentation d'entrée CA ayant une tension d'entrée;
la conversion de l'alimentation d'entrée CA d'une source de tension en une source d'intensité afin de fournir une intensité CA limitée avec l'inducteur d'entrée (7);
la correction d'une alimentation avec le condensateur d'entrée (8);
la multiplication de la tension d'entrée afin de fournir une tension de sortie multipliée aux LED (2);
le redressement de l'alimentation d'entrée CA afin de fournir une alimentation de sortie redressée aux LED (2) pour produire un flux lumineux; et
le filtrage de l'alimentation de sortie redressée avec le condensateur de filtrage (6) pour permettre une variation de l'alimentation de sortie redressée correspondant à une variation du flux lumineux imperceptible par l'œil humain, sans l'utilisation de circuits de lissage, d'interrupteurs actifs, ni de condensateurs électrolytiques.

9. Procédé de la revendication 8 dans lequel la pluralité de LED (2) est connectée en série.

10. Procédé de la revendication 8 ou 9 dans lequel la tension d'entrée est doublée, triplée ou quadruplée.

11. Procédé de la revendication 8 ou 9 dans lequel la tension d'entrée est multipliée en utilisant l'un ou la combinaison des éléments suivants : doubleur de tension Delon et un doubleur de tension Greinacher.

12. Système d'éclairage LED équipé d'un pilote (1) conformément à l'une quelconque des revendications 1 à 7.
